# EUROPÄISCHE PATENTSCHRIFT

(11) **EP 3 507 133 B1**
(45) Veröffentlichungstag und Bekanntmachung des Hinweises auf die Patenterteilung: **13.10.2021**
(21) Anmeldenummer: 17790946.2
(22) Anmeldetag: 29.08.2017
(51) Int. Cl.: B60N 2/005, B60N 2/01, B60N 2/02, B60N 2/06, B60N 2/20, B60N 3/00, B60N 2/14

(54) **INNENRAUM EINES FAHRZEUGS**
INTERIOR OF A VEHICLE
HABITACLE D'UN VÉHICULE

(30) Priorität: 31.08.2016 DE 102016010469
(43) Veröffentlichungstag der Anmeldung: 10.07.2019
(73) Patentinhaber: GRAMMER AG, 92289 Ursensollen (DE)
(72) Erfinder: SCHLIERF, Manfred, 92224 Amberg (DE); KELLER, Hubert, 92245 Kümmersbruck (DE)
(74) Vertreter: Roche, von Westernhagen & Ehresmann
(86) Internationale Anmeldenummer: PCT/DE2017/000275
(87) Internationale Veröffentlichungsnummer: WO 2018/041289

(56) Entgegenhaltungen:
- DE-A1- 10 335 046
- DE-A1-102005 043 554
- DE-A1-102006 011 994
- DE-A1-102014 224 560
- JP-A- 2015 209 193
- US-A- 3 833 257
- US-A1- 2003 234 550
- Paul A. Eisenstein: "Rinspeed Goes Autonomous with XchangE | TheDetroitBureau.com", The Detroit Bureau, 19. Dezember 2013 (2013-12-19), XP055415060, WWW Gefunden im Internet: URL:http://www.thedetroitbureau.com/2013/1 2/rinspeed-goes-autonomous-with-xchange/ [gefunden am 2017-10-12]

## Beschreibung

Die Erfindung betrifft einen Fahrzeuginnenraum.

Fahrzeug ist im Sinne der Erfindung ein Land-, Luft- oder Wasserfahrzeug.

Ein solches Fahrzeug ist aus offenkundiger Vorbenutzung bekannt. Ein PKW umfasst einen Fahrzeuginnenraum, bei welchem zwei Sitze im Frontbereich des Fahrzeugs und zwei Sitze im Fondbereich des Fahrzeugs angeordnet sind. Zwischen den Sitzen im Frontbereich ist eine Konsole fest angeordnet, welche eine Armauflage sowie einen Behälter mit Aufnahmefächern, ein Bedienteil sowie einen USB-Anschluss umfasst. Ein Innenraum nach Oberbegriff des Anspruchs 1 ist aus der DE10335046 bekannt.

Es war Aufgabe der Erfindung den Fahrzeuginnenraum derart auszubilden, dass die darin enthaltenen Komponenten flexibler angeordnet werden können. Das kann z.B. dann gewünscht sein, wenn das Fahrzeug von einem manuellen Stuerungsmodus in einen automatischen Steuerungsmodus - oder umgekehrt - überführt wird. Es soll z.B. möglich sein, wenigstens den Sitz des Fahrzeugführers und ggf. auch den neben dem Fahrzeugführer im Frontbereich befindlichen Sitz von einer Position, in welcher er in Fahrrichtung gewandt ist, in eine Position zu bewegen, in welcher der Sitz in eine andere Position gewandt ist, in welcher er z.B. den Sitzen des Fondbereichs zugewandt ist oder z.B. einem Tisch zugewandt ist.

Die Aufgabe wurde gelöst durch einen Fahrzeuginnenraum mit den Merkmalen des Anspruchs 1.

Der erfindungsgemäße Fahrzeuginnenraum umfasst wenigstens einen Sitz. Der Fahrzeuginnenraum kann z.B. zwei Sitze im Frontbereich und z.B. zwei oder mehr Sitze im Fondbereich umfassen. Neben dem Sitz ist eine Konsole angeordnet, um dem Sitzinsassen den Zugriff auf die Konsole zu ermöglichen.

Der Sitz ist mittels einer Verstellvorrichtung derart verstellbar ausgebildet, dass er aus einer ersten Position, in welcher er zur Fahrtrichtung ausgerichtet ist, in eine zweite Position bewegbar ist. "Zur Fahrtrichtung ausgerichtet" bedeutet im Sinne der Erfindung, dass ein in dem Sitz befindlicher Insasse in Fahrtrichtung schaut. In der zweiten Position kann der Sitz z.B. derart ausgerichtet sein, dass der Insasse z.B. den Sitzen des Fahrzeugfonds zugewandt ist oder dass der Insasse z.B. einem Tisch zugewandt ist, der sich im Fahrzeug befindet. Bei der Bewegung zwischen der ersten und der zweiten Position führt der Sitz z.B. eine translatorische, eine rotatorische oder eine gemischte Bewegung mit translatorischen und rotatorischen Anteilen aus.

Wenigstens ein Teil der Konsole ist mittels der Verstellvorrichtung derart bewegbar gelagert, dass er aus einer primären Position, in welcher er neben dem Sitz angeordnet ist, in eine sekundäre Position bewegbar ist, in welcher er während der Bewegung des Sitzes zwischen der ersten Position und der zweiten Position außerhalb der Bewegungsbahn des Sitzes angeordnet ist. Das bedeutet, dass die gesamte Konsole oder ein Teil der Konsole aus der primären Position in die sekundäre Position bewegbar ist. Bei der Bewegung zwischen der primären und der sekundären Position führt der Teil der Konsole z.B. eine translatorische, eine rotatorische oder eine gemischte Bewegung mit translatorischen und rotatorischen Anteilen aus. In der sekundären Position ist der Teil z.B. zwischen zwei Sitzen des Fondbereichs oder in Reichweite einer Sitzbank des Fondbereichs angeordnet.

Auf diese Weise ist es möglich, den Teil der Konsole von der primären Position aus der Bewegungsbahn des Sitzes in die sekundäre Position zu bewegen und anschließend den Sitz, z.B. den Sitz des Fahrzeugführers und einen weiteren im Frontbereich angeordneten Sitz in die zweite Position zu bewegen. Der Teil der Konsole kann dann entweder in der sekundären Position verbleiben oder wieder in die primäre Position zurückbewegt werden, um dem Insassen des Sitzes auch nachdem der Sitz in die zweite Position bewegt wurde, den Zugriff auf die Konsole zu gestatten.

Der Sitz des Fahrzeugführers und ggf. auch der Sitz neben dem Fahrzeugführer im Frontbereich können auf diese Weise bei automatischer Steuerung des Fahrzeugs derart ausgerichtet sein, dass sich der Fahrzeugführer z.B. besser mit den übrigen Fahrzeuginsassen unterhalten kann oder z.B. Tätigkeiten an einem Tisch nachgehen kann. Die Verstellvorrichtung weist z.B. eine Führung für den Sitz und / oder für den Teil der Konsole auf. Mittels der Führung können die Konsole und der Sitz bei einer rotatorischen, einer translatorischen oder bei einer gemischten Bewegung mit translatorischen und rotatorischen Anteilen geführt werden.

Die Verstellvorrichtung umfasst einen Antrieb für den Sitz und für den Teil der Konsole. Dies kann z.B. ein elektrischer Antrieb sein. Der Antrieb kann z.B. für die translatorische, rotatorische oder die gemischte Bewegung des gesamten Sitzes mit translatorischen oder rotatorischen Anteilen vorgesehen sein. Des Weiteren kann der Antrieb z.B. Teile des Sitzes, wie z.B. die Armlehne oder die Rückenlehne antreiben.

Erfindungsgemäss ist eine Steuerung vorhanden, welche bei einem Signal zur Verstellung des Sitzes den Ablauf der Bewegung des Teils der Konsole und der Verstellung des Sitzes steuert, indem sie den Antrieb für den Teil der Konsole und den Antrieb für den Sitz steuert. Die Steuerung steuert den Antrieb z.B. derart, dass zunächst die Konsole aus der primären Position in die sekundäre Position bewegt wird und anschließend der Fahrersitz und der Beifahrersitz in eine Proximalstellung gebracht werden, indem die Armlehne in eine Nichtgebrauchsposition in eine Aussparung der Rückenlehne gesenkt wird und die Rückenlehne in eine aufrechte Position verbracht wird. Dann veranlasst die Steuerung, dass zunächst der Fahrersitz aus der ersten Position in die zweite Position und danach der Beifahrersitz aus der ersten Position in die zweite Position bewegt, und schließlich die Konsole wieder in die primäre Position zurückbewegt wird.

Der Sitz umfasst z.B. wenigstens eine Armlehne, die zwischen einer Gebrauchs- und einer Nichtgebrauchsposition bewegbar ist, wobei z.B. die Armlehne in der Nichtgebrauchsposition in eine Aussparung einer Rückenlehne des Fahrzeugsitzes integriert ist. Bei einer Positionsänderung des Sitzes befindet sich die Armlehne in der Nichtgebrauchsposition nicht in der Bewegungsbahn anderer Komponenten des Innenraums des Fahrzeugs.

Gemäß einer Ausführungsform bildet die Konsole, insbesondere ein Rahmen der Konsole, einen Armauflagebereich aus.

Der Sitz und / oder die Konsole umfassen z.B. wenigstens eine Klimatisierungs-komponente und / oder eine Bedienkomponente für eine Steuerung und oder einen Netzwerkanschluss und / oder ein Fach, wie Kühlfach oder Ablagefach.

Der Teil der Konsole ist z.B. in der primären Position zwischen zwei Sitzen des Frontbereichs angeordnet und in der sekundären Position in Reichweite eines Insassen eines Sitzes oder einer Sitzbank des Fondbereichs angeordnet.

Die Mittelkonsole umfasst z.B. einen Rahmen und einen Behälter, wobei der Behälter relativ zu dem Rahmen bewegbar gelagert ist. Es ist z.B. möglich, dass der Rahmen fest im Fahrzeuginnenraum angeordnet ist und der Behälter bewegbar gelagert ist. Gemäß einer Alternative sind der Rahmen und der Behälter bewegbar gelagert und können voneinander separiert werden.

Der Rahmen und der Behälter können z.B. in eine geschachtelte Position bewegt sein, in welcher der Behälter in einem Tunnel des Rahmens aufgenommen ist. Aus der geschachtelten Position kann der Behälter z.B. in eine Separierposition bewegt werden, in welcher der Behälter von dem Rahmen separiert ist.

Weitere Vorteile der Erfindung ergeben sich anhand der Beschreibung eines in den schematischen Fig. dargestellten Ausführungsbeispiels. Es zeigen:
Fig. 1 eine Seitenansicht eines Fahrzeugs mit einem Frontbereich und mit einem Fondbereich,
Fig. 2 eine Ansicht gemäß Ansichtspfeil II in Fig. 1, wobei sich Sitze des Frontbereichs in einer ersten Position befinden und wobei eine Konsole in einer primären Position angeordnet ist,
Fig. 3 in Anlehnung an Fig. 2 eine Draufsicht auf das Fahrzeug, wobei sich die Sitze des Frontbereichs in der ersten Position befinden und wobei die Konsole in einer sekundären Position angeordnet ist, und
Fig. 4 in Anlehnung an Fig. 2 eine Draufsicht auf das Fahrzeug, wobei sich die Sitze des Frontbereichs in einer zweiten Position befinden und wobei die Konsole in der primären Position angeordnet ist.

Ein Fahrzeug insgesamt wird in den Fig. mit dem Bezugszeichen 10 bezeichnet. Gleiche Bezugszeichen in den unterschiedlichen Fig. bezeichnen entsprechende Teile, auch wenn kleine Buchstaben nachgestellt oder weggelassen sind.

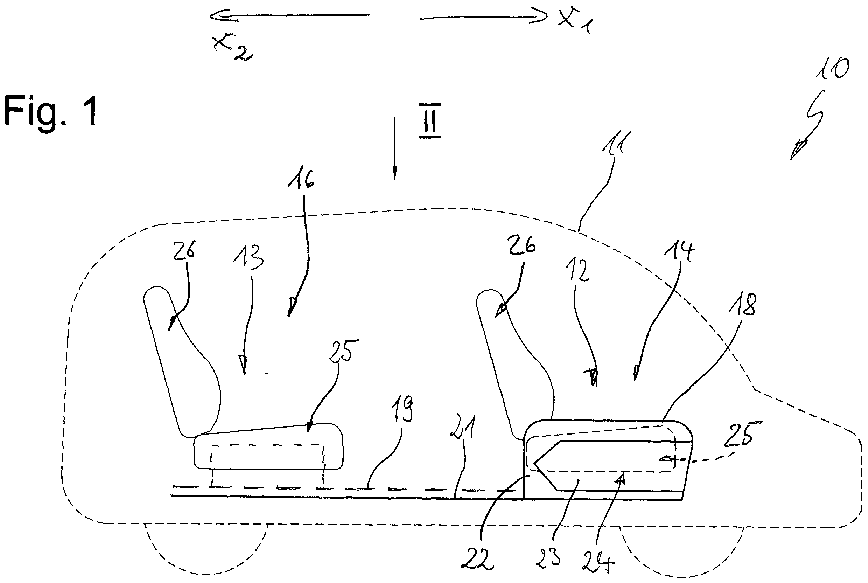

In Fig. 1 ist eine Seitenansicht des Fahrzeugs 10 dargestellt. Eine Wand 11 des Fahrzeugs 10 ist durch eine gestrichelte Linie angedeutet. Die Fahrtrichtung bei Vorwärtsfahrt ist mit x1 bezeichnet. Das Fahrzeug 10 weist einen Innenraum 20 mit einem Frontbereich 12 und einen Fondbereich 13 auf.

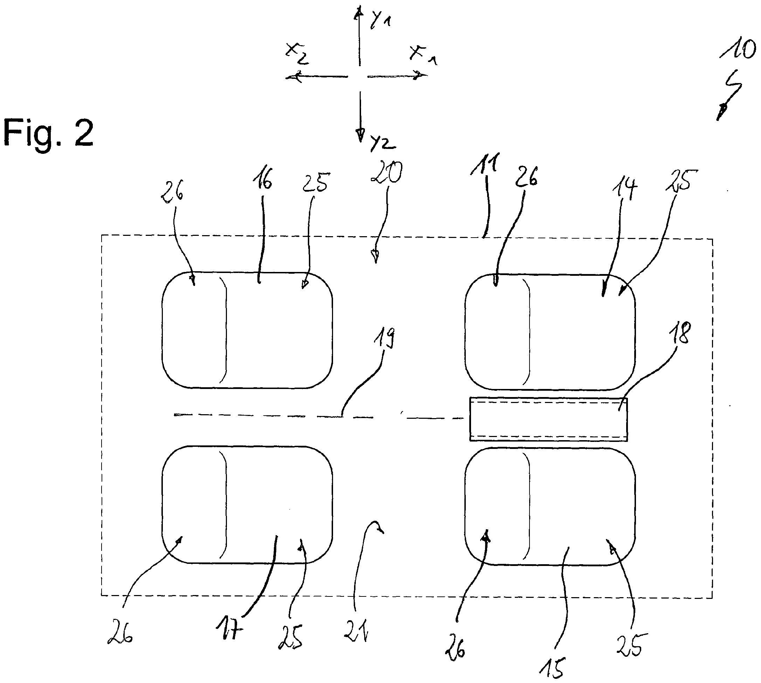

Gemäß Fig. 2 umfasst der Frontbereich 12 zwei Sitze 14 und 15. Der Fondbereich 13 umfasst zwei Sitze 16 und 17. Die Sitze 14, 15, 16 und 17 sind gemäß Fig. 2 in Richtung x1 ausgerichtet, d.h. ein Sitzinsasse schaut in Fahrtrichtung x1. Jeder Sitz weist ein Sitzteil 25 und ein Lehnenteil 26 auf. Zwischen den Sitzen 14, 15 des Frontbereichs 12 ist ein Abstand a ausgebildet, welcher die Anordnung einer Konsole 18 in dem Zwischenraum ermöglicht.

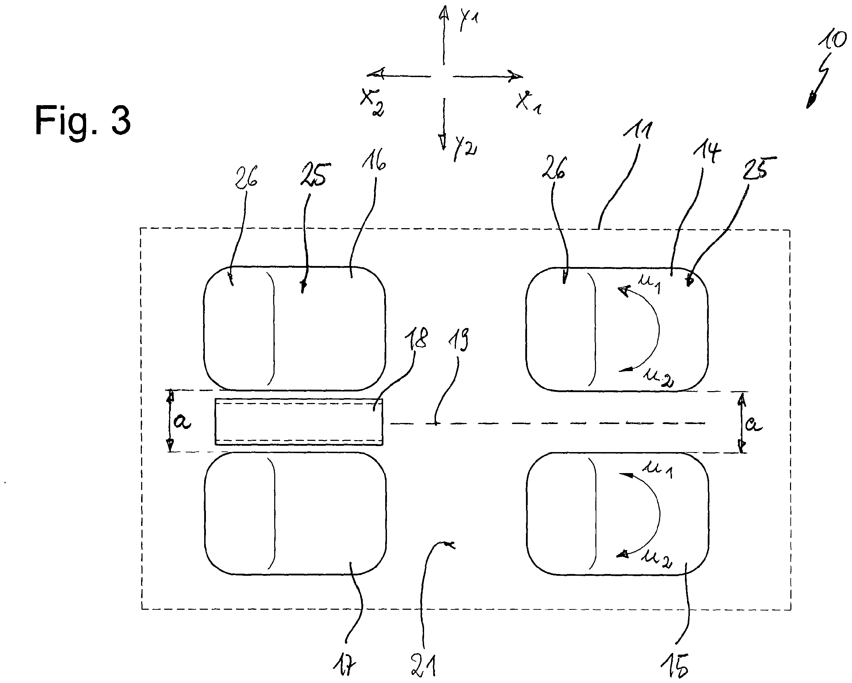

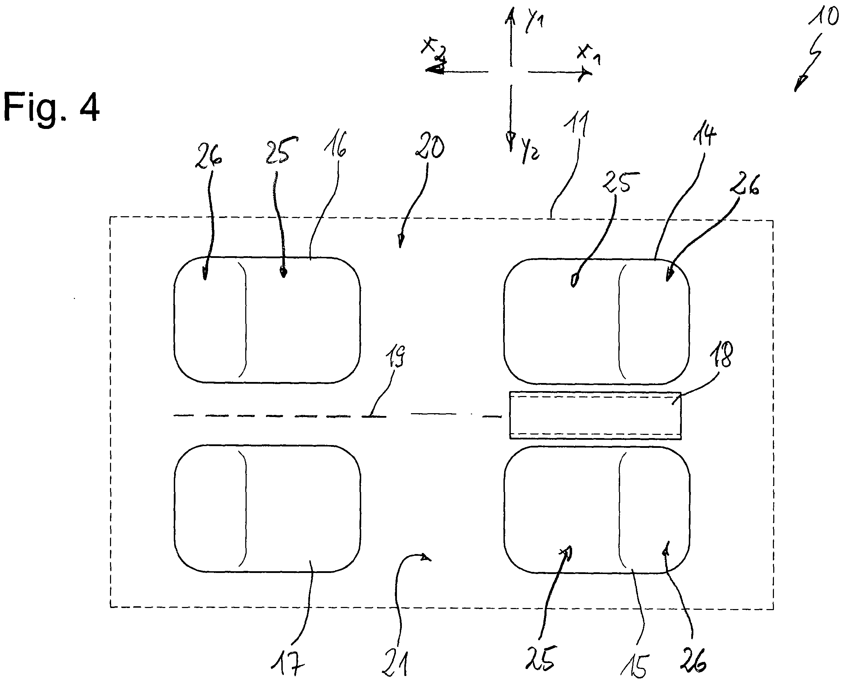

Die Sitze 14 und 15 sind aus der in den Fig. 2 und 3 dargestellten ersten Position in eine zweite in Fig. 4 dargestellte Position verstellbar. In der zweiten Position sind die Sitze 14 und 15 z.B. um 180 Grad verschwenkt. D.h., sie sind in Richtung x2 ausgerichtet. Gemäß einer Alternative könnten aber z.B. die Sitze 14 und 15 auch um einen beliebigen anderen Winkel verschwenkbar sein. Zusätzlich könnten sie z.B. in die Richtungen x1 oder x2 und / oder in die Richtungen y1 oder y2 translatorisch verstellbar sein. Gemäß Fig. 2 ist zu erkennen, dass sich die Konsole 18 in der Bewegungsbahn der Sitze 14 und 15 befindet.

Die Konsole 19 ist zwischen einer primären Position, die in Fig. 2 dargestellt ist, und einer sekundären Position, die in Fig. 3 zu sehen ist, bewegbar gelagert. In der sekundären Position ist die Konsole 18 zwischen den Sitzen 16 und 17 angeordnet. Für die Bewegung der Konsole 18 ist eine Führung 19 vorgesehen, die an einem Boden 21 des Innenraums 20 befestigt ist. Die Führung 19 ermöglicht eine translatorische Bewegung der Konsole 18 aus der primären Position in Richtung x2 in die sekundäre Position. Aus der sekundären Position kann die Konsole 18 in Richtung x1 in die primäre Position bewegt werden.

Die Sitze 14 und 15 sowie die Konsole 18 können mit einer nicht dargestellten Antriebsvorrichtung mit Elektromotoren verstellt werden. Die Antriebsvorrichtung wird von einer ebenfalls nicht dargestellten Steuerung gesteuert. Von einem Fahrzeuginsassen wird z.B. über ein der Konsole 18 zugeordnetes Bedienfeld der Steuerung das Signal übermittelt, dass der Autopilot angeschaltet und die Sitze aus der ersten Position in die zweite Position bewegt werden sollen.

Die Steuerung steuert dann die Antriebsvorrichtung derart, dass die Konsole 18 in die sekundäre Position gemäß Fig. 3 bewegt wird. Befindet sich die Konsole 18 in der sekundären Position, steuert die Steuerung die Antriebsvorrichtung z.B. derart, dass zunächst der Sitz 15 in Richtung u1 in die zweite Position geschwenkt wird und anschließend der Sitz 14 in die zweite Position geschwenkt wird. Vor dem Schwenken der Sitze 14 und 15 können diese z.B. in eine Proximalstellung gebracht werden, indem eine Lehnenteil 26 in eine vertikale Position verbracht und vorhandene Armlehnen in eine Stauposition in eine Aussparung des Lehnenteils 26 versenkt wird. Danach wird die Antriebsvorrichtung von der Steuerung derart gesteuert, dass die Konsole zurück in die primäre Position bewegt wird (siehe Fig. 4).

Wenn das Fahrzeug wieder manuell gelenkt werden soll, kann ein Insasse über das Bedienfeld wieder ein Signal an die Steuerung senden, welches einen umgekehrten Algorithmus auslöst. D.h., die Steuerung veranlasst, dass die Konsole 18 aus der primären Position in die sekundäre Position bewegt wird. Anschließend werden der Sitz 15 in Richtung u2 und dann der Sitz 14 in Richtung u1 aus der zweiten Position in die erste Position geschwenkt. Auch vor dieser Bewegung der Sitze 14 und 15 können diese wieder in die Proximalstellung gebracht werden. Danach wird die Konsole 18 in die primäre Position zurück bewegt.

Gemäß Fig. 1 ist die Konsole 18 C-förmig ausgebildet. Sie umfasst einen Rahmen 22 und einen Behälter 23. Der Rahmen 22 bildet einen Tunnel 24 in welchem der Behälter 23 in einer Schachtelposition angeordnet werden kann. Der Rahmen 22 umfasst eine nicht dargestellte Öffnung, mittels welcher der Behälter 23 aus der Schachtelposition, die in Fig. 1 dargestellt ist, in Richtung x2 in eine Separierposition bewegbar ist, in welcher der Behälter zwischen den Sitzen 16 und 17 angeordnet ist. Bei der Bewegung wird der Behälter 23 von der Führung 19 geführt und von der Antriebsvorrichtung angetrieben. Mit anderen Worten, wenn die Sitzposition der Sitze 14 und 15 nicht geändert werden soll, kann der Behälter 23 gesondert in die Separierposition bewegt werden, während der Rahmen 22 in der primären Position verbleibt. Die Insassen der Sitze 16 und 17 haben dann ebenfalls die Möglichkeit auf den Behälter zuzugreifen.

Mittels einer Arretiervorrichtung kann die gesamte Konsole 18 oder der Behälter 23 allein in definierten Positionen oder in jeder eingestellten Position arretierbar sein.

## Patentansprüche

1. Innenraum (20) eines Fahrzeugs (10) mit wenigstens einem Sitz (14, 15, 16, 17) und mit einer Konsole (18), wobei wenigstens ein Sitz (14, 15) mittels einer Verstellvorrichtung derart verstellbar ausgebildet ist, dass er aus einer ersten Position, in welcher er zur Fahrtrichtung ausgerichtet ist in eine zweite Position bewegbar ist und dass wenigstens ein Teil der Konsole (18) derart bewegbar gelagert ist, dass er aus einer primären Position, in welcher er neben dem Sitz in der Bewegungsbahn des Sitzes angeordnet ist, in eine sekundäre Position bewegbar ist, in welcher er während der Bewegung des Sitzes zwischen der ersten Position und der zweiten Position außerhalb der Bewegungsbahn des Sitzes angeordnet ist, **dadurch gekennzeichnet ist, dass** die Verstellvorrichtung einen Antrieb für den Sitz und einen Antrieb für den Teil der Konsole umfasst, dass eine Steuerung vorhanden ist, mittels welcher bei einem Signal zur Verstellung des Sitzes der Ablauf der Bewegung des Teils der Konsole und der Verstellung des Sitzes steuerbar ist, indem die Steuerung den Antrieb für den Teil der Konsole und den Antrieb für den Sitz steuert, derart, dass der Teil der Konsole von der primären in die sekundäre Position bewegt wird, bevor der Sitz von der ersten in die zweite Position bewegt wird.

2. Innenraum (20) eines Fahrzeugs (10) nach Anspruch 1, **dadurch gekennzeichnet, dass** die Verstellvorrichtung eine Führung (19) für den Sitz (14, 15) und / oder für den Teil der Konsole (18) aufweist.

3. Innenraum (20) eines Fahrzeugs (10) nach Anspruch 1 oder Anspruch 2, **dadurch gekennzeichnet, dass** die Verstellvorrichtung einen Antrieb für eine translatorische oder eine rotatorische oder eine aus translatorischen und rotatorischen Anteilen gemischte Bewegung des Sitzes aufweist.

4. Innenraum (20) eines Fahrzeugs (10) nach einem der vorangehenden Ansprüche, **dadurch gekennzeichnet, dass** die Verstellvorrichtung einen Antrieb für eine translatorische oder eine rotatorische oder eine aus translatorischen und rotatorischen Anteilen gemischte Bewegung für den Teil der Konsole (18) aufweist.

5. Innenraum (20) eines Fahrzeugs (10) nach einem der vorangehenden Ansprüche, **dadurch gekennzeichnet, dass** der Sitz (14, 15) wenigstens eine Armlehne umfasst, die zwischen einer Gebrauchsposition und einer Nichtgebrauchsposition bewegbar ist und dass die Armlehne in der Nichtgebrauchsposition in eine Aussparung einer Rückenlehne (26) des Sitzes integriert ist.

6. Innenraum (20) eines Fahrzeugs (10) nach einem der vorangehenden Ansprüche, **dadurch gekennzeichnet, dass** mittels der Verstellvorrichtung eine Rückenlehne zwischen einer vertikalen Position und einer geneigten Position verstellbar ist und / oder dass mittels der Verstellvorrichtung eine Armlehne zwischen einer Gebrauchsposition und einer Nichtgebrauchsposition bewegbar ist.

7. Innenraum (20) eines Fahrzeugs (10) nach einem der vorangehenden Ansprüche, **dadurch gekennzeichnet, dass** eine Steuerung vorgesehen ist, welche bei einem Signal zur Verstellung des Sitzes den Ablauf der Verstellung des Teils der Konsole (18) und der Verstellung des Sitzes steuert, wobei sie eine Antriebsvorrichtung mit Antrieben für den Teil der Konsole (18) und / oder für den Sitz (14, 15) steuert.

8. Innenraum (20) eines Fahrzeugs (10) nach Anspruch 7, **dadurch gekennzeichnet, dass** mittels der Steuerung die Verstellvorrichtung derart steuerbar ist, dass der Sitz (14, 15) vor der Bewegung zwischen der ersten Position und der zweiten Position in eine Proximalstellung verstellbar ist, in welcher ein Lehnenteil (26) des Sitzes (14, 15) in eine vertikale Position bewegt ist und / oder eine Armlehne in eine Nichtgebrauchsposition bewegt ist.

9. Innenraum (20) eines Fahrzeugs (10) nach einem der vorangehenden Ansprüche, **dadurch gekennzeichnet, dass** der Teil der Konsole (18) in der primären Position zwischen zwei Sitzen (14, 15) eines Frontbereichs (12) angeordnet ist und in der sekundären Position in Reichweite der Sitze (16, 17) eines Fondbereichs (13) angeordnet ist.

10. Innenraum (20) eines Fahrzeugs (10) nach einem der vorangehenden Ansprüche, **dadurch gekennzeichnet, dass** der Sitz (14, 15) und / oder die Konsole (18) wenigstens eine Klimatisierungskomponente und / oder wenigstens eine Bedienkomponente und / oder wenigstens einen Netzwerkanschluss und / oder wenigstens ein Fach, wie Kühlfach oder Ablagefach umfasst.

11. Innenraum (20) eines Fahrzeugs (10) nach einem der vorangehenden Ansprüche, **dadurch gekennzeichnet, dass** die Konsole (18) einen Rahmen (22) und einen Behälter (23) umfasst und dass der Behälter (23) relativ zu dem Rahmen (22) bewegbar gelagert ist.

## Claims

1. Interior (20) of a vehicle (10) with at least one seat (14, 15, 16, 17) and with a console (18), wherein at least one seat (14, 15) is formed so as to be adjustable by means of an adjusting device in such manner that it is movable from a first position, in which it is aligned in the direction of travel, into a second position and that at least one part of the console (18) is movably mounted in such manner that it is movable from a primary position, in which it is arranged next to the seat in the movement path of the seat, into a secondary position, in which it is arranged outside of the movement path of the seat during the movement of the seat between the first position and the second position, **characterised in that** the adjusting device comprises a drive for the seat and a drive for the part of the console, that a controller is present by means of which the process of moving the part of the console and adjusting the seat is controllable in the case of a signal to adjust the seat by the control controlling the drive for the part of the console and the drive for the seat in such manner that the part of the console is moved from the primary into the secondary position before the seat is moved from the first into the second position.

2. Interior (20) of a vehicle (10) according to claim 1, **characterised in that** the adjusting device has a guide (19) for the seat (14, 15) and/or for the part of the console (18) .

3. Interior (20) of a vehicle (10) according to claim 1 or claim 2, **characterised in that** the adjusting device has a drive for a straight-line or a rotational movement of the seat or a movement of the seat mixed with straight-line and rotational portions.

4. Interior (20) of a vehicle (10) according to any one of the preceding claims, **characterised in that** the adjusting device has a drive for a straight-line or a rotational movement for the part of the console (18) or a movement for the part of the console (18) mixed with straight-line and rotational portions.

5. Interior (20) of a vehicle (10) according to any one of the preceding claims, **characterised in that** the seat (14, 15) comprises at least one armrest which is movable between a position of use and a position of non-use and **in that** the armrest is integrated into a recess of a backrest (26) of the seat in the position of non-use.

6. Interior (20) of a vehicle (10) according to any one of the preceding claims, **characterised in that** a backrest is adjustable between a vertical position and an inclined position by means of the adjusting device and/or **in that** an armrest is movable between a position of use and a position of non-use by means of the adjusting device.

7. Interior (20) of a vehicle (10) according to any one of the preceding claims, **characterised in that** a controller is provided which controls the process of adjusting the part of the console (18) and adjusting the seat in the case of a signal to adjust the seat, wherein said controller controls a drive device with drives for the part of the console (18) and/or for the seat (14, 15).

8. Interior (20) of a vehicle (10) according to claim 7, **characterised in that** the adjusting device is controllable by means of the controller in such manner that the seat (14, 15) is adjustable, prior to the movement between the first position and the second position, into a proximal position in which a rest part (26) of the seat (14, 15) is moved into a vertical position and/or an armrest is moved into a position of non-use.

9. Interior (20) of a vehicle (10) according to any one of the preceding claims, **characterised in that** the part of the console (18) in the primary position is arranged between two seats (14, 15) of a front region (12) and in the secondary position is arranged within reach of the seats (16, 17) of a back region (13).

10. Interior (20) of a vehicle (10) according to any one of the preceding claims, **characterised in that** the seat (14, 15) and/or the console (18) comprises at least one air-conditioning component, and/or at least one operating component, and/or at least one network connection, and/or at least one compartment such as a cooling compartment or a storage compartment.

11. Interior (20) of a vehicle (10) according to any one of the preceding claims, **characterised in that** the console (18) comprises a frame (22) and a container (23) and **in that** the container (23) is mounted so as to be movable relative to the frame (22).

## Revendications

1. Habitacle (20) d'un véhicule (10) avec au moins un siège (14, 15, 16, 17) et avec une console (18), dans lequel au moins un siège (14, 15) est conçu de façon réglable au moyen d'un dispositif de réglage, de telle sorte qu'il peut se déplacer d'une première position dans laquelle il est orienté dans le sens du déplacement à une deuxième position, et au moins une partie de la console (18) est montée de manière mobile, de telle sorte qu'elle peut se déplacer d'une position primaire dans laquelle elle est disposée près du siège sur la trajectoire du siège à une position secondaire dans laquelle elle est disposée, pendant le déplacement du siège entre la première position et la deuxième position, hors de la trajectoire du siège, **caractérisé en ce que** le dispositif de réglage comprend un moteur pour le siège et un moteur pour la partie de la console, qu'il existe une commande au moyen de laquelle, en présence d'un signal pour régler le siège, le déroulement du déplacement de la partie de la console et du réglage du siège peut être contrôlée, la commande contrôlant le moteur destiné à la partie de la console et le moteur destiné au siège, de telle sorte que la partie de la console est déplacée de la position primaire à la position secondaire avant que le siège soit déplacé de la première à la deuxième position.

2. Habitacle (20) d'un véhicule (10) selon la revendication 1, **caractérisé en ce que** le dispositif de réglage présente un mécanisme de guidage (19) pour le siège (14, 15) et/ou pour la partie de la console (18).

3. Habitacle (20) d'un véhicule (10) selon la revendication 1 ou la revendication 2, **caractérisé en ce que** le dispositif de réglage présente un moteur pour un déplacement du siège en translation, en rotation ou mixte composé d'éléments de translation et de rotation.

4. Habitacle (20) d'un véhicule (10) selon une des revendications précédentes, **caractérisé en ce que** le dispositif de réglage présente un moteur pour un déplacement de la partie de la console (18) en translation, en rotation ou mixte composé d'éléments de translation et de rotation.

5. Habitacle (20) d'un véhicule (10) selon une des revendications précédentes, **caractérisé en ce que** le siège (14, 15) comprend au moins un accoudoir qui peut être déplacé entre une position d'utilisation et une position de non-utilisation et que l'accoudoir, en position de non-utilisation, est intégré dans une cavité d'un dossier (26) du siège.

6. Habitacle (20) d'un véhicule (10) selon une des revendications précédentes, **caractérisé en ce qu'**au moyen du dispositif de réglage, un dossier peut être réglé entre une position verticale et une position inclinée et/ou qu'au moyen du dispositif de réglage, un accoudoir peut être déplacé entre une position d'utilisation et une position de non-utilisation.

7. Habitacle (20) d'un véhicule (10) selon une des revendications précédentes, **caractérisé en ce qu'**il est prévu une commande qui, en présence d'un signal pour régler le siège, contrôle le déroulement du déplacement de la partie de la console (18) et du réglage du siège, celle-ci contrôlant un dispositif moteur avec des moteurs pour la partie de la console (18) et/ou pour le siège (14, 15).

8. Habitacle (20) d'un véhicule (10) selon la revendication 7, **caractérisé en ce qu'**au moyen de la commande, le dispositif de réglage peut être contrôlé de telle sorte que le siège (14, 15), avant le déplacement entre la première position et la deuxième position, peut être réglé dans une position proximale dans laquelle un dossier (26) du siège (14, 15) est mis dans une position verticale et/ou un accoudoir est mis dans une position de non-utilisation.

9. Habitacle (20) d'un véhicule (10) selon une des revendications précédentes, **caractérisé en ce que** la partie de la console (18), dans la position primaire, est disposée entre deux sièges (14, 15) d'une zone avant (12) et, dans la position secondaire, est disposée à portée des sièges (16, 17) d'une zone arrière (13).

10. Habitacle (20) d'un véhicule (10) selon une des revendications précédentes, **caractérisé en ce que** le siège (14, 15) et/ou la console (18) comprend au moins un composant de climatisation et/ou au moins un composant de commande et/ou au moins une connexion réseau et/ou au moins un compartiment tel qu'un compartiment réfrigéré ou un compartiment de rangement.

11. Habitacle (20) d'un véhicule (10) selon une des revendications précédentes, **caractérisé en ce que** la console (18) comprend un châssis (22) et un réceptacle (23) et que le réceptacle (23) est monté de façon mobile par rapport au châssis (22).
